# EUROPÄISCHE PATENTSCHRIFT

(11) **EP 2 630 006 B1**
(45) Veröffentlichungstag und Bekanntmachung des Hinweises auf die Patenterteilung: **16.03.2016**
(21) Anmeldenummer: 11815688.4
(22) Anmeldetag: 05.10.2011
(51) Int. Cl.: B60R 22/26, B60R 22/34, B60N 2/58, B60N 2/68, B60R 22/18

(54) **FAHRZEUGSITZ**
VEHICLE SEAT
SIÈGE DE VÉHICULE

(30) Priorität: 18.10.2010 DE 102010049201
(43) Veröffentlichungstag der Anmeldung: 28.08.2013
(73) Patentinhaber: Johnson Controls Components GmbH & Co. KG, 67657 Kaiserslautern (DE)
(72) Erfinder: JUNG, Thomas, 66909 Wahnwegen (DE); WENZ, Frank, 67685 Erzenhausen (DE); GALIJASEVIC, Sasa, 67657 Kaiserslautern (DE)
(74) Vertreter: Wilhelm, Wolfgang
(86) Internationale Anmeldenummer: PCT/DE2011/075242
(87) Internationale Veröffentlichungsnummer: WO 2012/052015

(56) Entgegenhaltungen:
- WO-A1-2009/080190
- US-A1- 2005 110 328

## Beschreibung

Die Erfindung bezieht sich auf einen Fahrzeugsitz insbesondere Kraftfahrzeugsitz, mit einer Sitzteilstruktur und einer mit seinem unteren Ende an der Sitzteilstruktur schwenkbar angeordneten, von einem Lehnenbezug überzogenen Lehnenstruktur, an deren schwellerseitigem oberen Bereich ein Gurtumlenker mit einer in Fahrzeuglängsrichtung gerichteten Gurtlauföffnung für einen Sicherheitsgurt befestigt ist, der von einem das eine Ende des Sicherheitsgurtes fest aufnehmenden Gurtaufrollautomaten aus durch die Gurtlauföffnung des Gurtumlenkers geführt ist.

Bei derartigen Fahrzeugsitzen (siehe z.B. WO 2009/080190 A1 (Keiper GmbH &Co Kg (De); 2.Juli 2009) ist es bekannt den Gurtumlenker aus dem Sitzbezug herausragend an der Lehnenstruktur anzuordnen.

Dies führt zu einem optisch unschönen Fahrzeugsitz.

Aufgabe der Erfindung ist es daher, einen optisch schönen Fahrzeugsitz der eingangs genannten Art zu schaffen, dessen Gurtumlenker einen eindeutig definierten Gurtumlenkpunkt besitzt.

Diese Aufgabe wird erfindungsgemäß dadurch gelöst, daß der Gurtumlenker von dem Lehnenbezug überzogen ist, wobei der Lehnenbezug überdeckend mit der Gurtlauföffnung eine durchgehende Gurtdurchtrittsöffnung aufweist, die lehnenvorderseitig von einer einen Gurtführungsschlitz aufweisenden, mit dem Lehnenbezug fest verbundenen und mit dem Gurtumlenker nicht fest verbundenen Gurtblende abgedeckt ist.

Dadurch, daß der Gurtumlenker von dem Lehnenbezug überzogen ist, erhält der Fahrzeugsitz ein harmonisches Aussehen.

Dieses harmonische Aussehen wird aufgrund der die Gurtdurchtrittsöffnung im Lehnenbezug abdeckenden Gurtblende nicht gestört.

Da die Gurtblende nicht mit dem Gurtumlenker sondern mit dem flexiblen Lehnenbezug fest verbunden ist, paßt sie sich in ihrer Lage immer dem Sicherheitsgurt an, so daß keine Beeinflussung der Lage des in der Gurtlauföffnung befindlichen Gurtumlenkpunktes am Gurtumlenker durch die Gurtblende erfolgt.

Zu einer vollständigen Anordnung des Sicherheitsgurts an dem Fahrzeugsitz führt es, wenn der Sicherheitsgurt von dem an der Rückseite des Fahrzeugsitzes im Bodenbereich angeordneten Gurtaufrollautomaten über die Rückseite des Fahrzeugsitzes oder die Lehnenstruktur zum Gurtumlenker, durch dessen Gurtlauföffnung sowie die Gurtdurchtrittsöffnung und den Gurtführungsschlitz zur Lehnenvorderseite und von dort zu einem schwellerseitig an der Sitzstruktur angeordneten Gurtendbeschlag geführt und mit seinem zweiten Ende mit dem Gurtendbeschlag fest verbunden ist, wobei eine Steckzunge verschiebbar zwischen dem Gurtführungsschlitz und dem Gurtendbeschlag auf dem Sicherheitsgurt angeordnet und mit einem tunnelseitig an der Sitzstruktur angeordneten Schloß verbindbar ist.

Vorzugsweise ist dabei der Gurtaufrollautomat an der Rückseite der Sitzteilstruktur befestigt.

Zur weiteren Verbesserung des harmonischen Aussehens kann der Sicherheitsgurt innerhalb des die Lehne lehnenvorderseitig und lehnenrückseitig bedeckenden Lehnenbezuges von dem Gurtaufrollautomaten zum Gurtumlenker geführt sein.

Zur Befestigung der Gurtblende an dem Lehnenbezug ist vorzugsweise die lehnenvorderseitig auf dem Lehnenbezug aufliegende Gurtblende mit einer den Lehnenbezug teilweise umgreifenden, eine mit der Gurtlauföffnung und dem Gurtführungsschlitz fluchtende Durchstecköffnung aufweisenden Bezugsblende verbunden.

Dabei ist die Gurtblende einfach montierbar, wenn die Gurtblende mittels einer Rastverbindung mit der Bezugsblende verbunden ist.

Besteht die Bezugsblende aus einem lehnenvorderseitig auf dem Lehnenbezug aufliegenden Blendenvorderteil und einem lehnenrückseitig auf dem Lehnenbezug aufliegenden Blendenrückteil, die miteinander verbunden sind, wobei die Gurtblende über das Blendenvorderteil auf dem Lehnenbezug in Auflage ist, so kann durch einfaches Positionieren von Blendenvorderteil und Blendenrückteil am Lehnenbezug und Verbinden der beiden Blendenteile miteinander die Bezugsblende am Lehnenbezug befestigt werden, so daß die Bezugsblende vor dem Überziehen der Lehnenstruktur mit dem Lehnenbezug vormontierbar ist.

Werkzeuge und Befestigungselemente sind dabei nicht erforderlich, wenn das Blendenvorderteil und das Blendenrückteil mittels einer Rastverbindung miteinander verbindbar sind.

Weisen die Gurtlauföffnung des Gurtumlenkers und/oder die Durchstecköffnung der Bezugsblende einen ein Durchführen des Gurtendbeschlags erlaubenden Querschnitt auf, so kann montagefreundlich der Sicherheitsgurt mit dem Gurtendbeschlag voraus nach Beziehen des Lehnenstrukturteils mit dem Lehnenbezug durch die Gurtlauföffnung des Gurtumlenkers und durch die Gurtdurchstecköffnung der Bezugsblende hindurch und zur Schwellerseite der Sitzstruktur geführt werden, um dort z.B. mittels Schrauben befestigt zu werden.

Ein Verdrehen des Sicherheitsgurtes bei dessen Durchlaufen des Gurtführungsschlitzes während eines Aufrollens durch den Gurtaufrollautomaten wird dadurch vermieden, daß der Querschnitt des Gurtführungsschlitzes dem Querschnitt des Sicherheitsgurtes entspricht.

Die Gurtblende kann in einfacher Weise nach fertigem Einbau des Sicherheitsgurtes montiert werden, wenn die Gurtblende einen den Gurtführungsschlitz mit der Umlaufkontur der Gurtblende verbindenden, in Erstreckungsrichtung des Sicherheitsgurtes durchgehenden Einfädelschlitz aufweist.

Damit kann der Sicherheitsgurt quer zu seiner Längserstreckung durch den Einfädelschlitz in den Gurtführungsschlitz eingeführt werden. Anschließend erfolgt die Verbindung der Gurtblende mit dem Lehnenbezug bzw. mit der Bezugsblende.

Ein Ausführungsbeispiel der Erfindung ist in der Zeichnung dargestellt und wird im folgenden näher beschrieben. Es zeigen
- Figur 1: eine perspektivische Ansicht der Strukturen eines Kraftfahrzeugsitzes mit Sicherheitsgurteinrichtung
- Figur 2: einen vergrößerten perspektivischen Ausschnitt des oberen schwellerseitigen Bereichs der Lehnenstruktur des Fahrzeugsitzes nach Figur 1
- Figur 3: eine perspektivische Explosionsansicht von vorn eines Gurtumlenkers, einer Bezugsblende und einer Gurtblende der Sicherheitsgurteinrichtung nach Figur 1
- Figur 4: die Darstellung aus Figur 3 in einer perspektivischen Explosionsansicht von hinten
- Figur 5: eine perspektivische Ansicht des oberen Teils einer Lehne des Kraftfahrzeugsitzes nach Figur 1

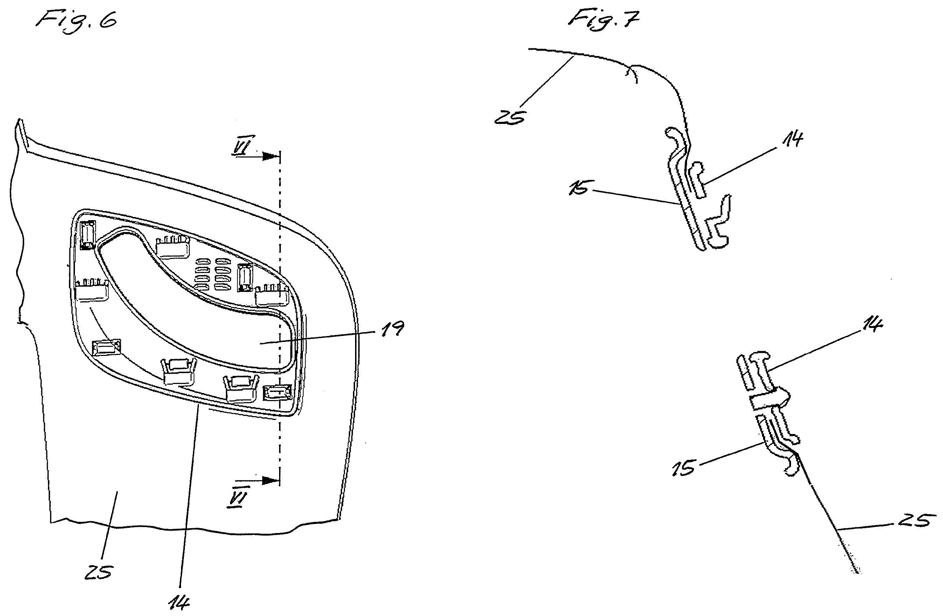

- Figur 6: eine Frontansicht des oberen schwellerseitigen Bereichs der Lehne des Kraftfahrzeugsitzes nach Figur 1 ohne Gurtblende
- Figur 7: eine Schnittansicht entlang der Linie VI - VI aus Figur 6

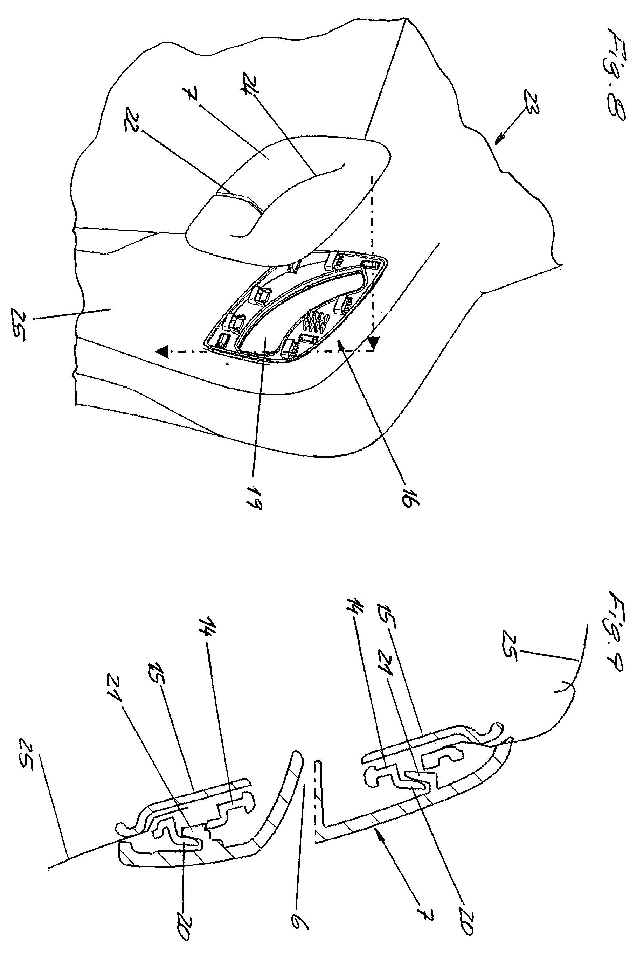

- Figur 8: eine perspektivische Frontansicht des oberen schwellerseitigen Bereichs der Lehne des Kraftfahrzeugsitzes nach Figur 1 mit Explosionsdarstellung der Gurtblende
- Figur 9: eine Schnittansicht entlang der Linie VI - VI aus Figur 6 zusätzlich mit montierter Gurtblende.

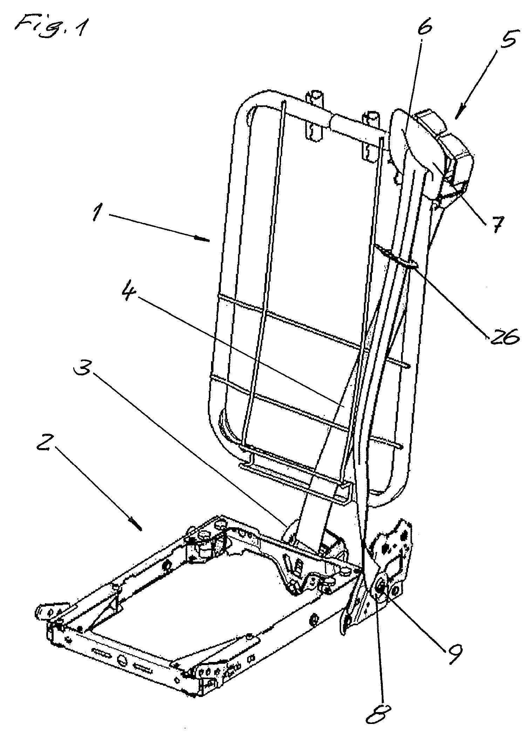

Figur 1 zeigt eine Lehnenstruktur 1 und eine Sitzteilstruktur 2 für einen Kraftfahrzeugsitz auf der Fahrerseite eines Kraftfahrzeugs.

Mittig ist an der Rückseite der Sitzteilstruktur 2 ein Gurtaufrollautomat 3 befestigt, der das eine Ende eines Sicherheitsgurtes 4 aufnimmt und bei Nichtbenutzung den Sicherheitsgurt 4 aufrollt.

Von dem Gurtaufrollautomat 3 ist der Sicherheitsgurt 4 zum schwellerseitigen oberen Eckbereich der Lehnenstruktur 1 zu einem fest mit der Lehnstruktur 1 verschraubten Gurtumlenker 5 geführt.

Durch den Gurtumlenker 5 und einen Gurtführungsschlitz 6 einer frontseitig davor angeordneten Gurtblende 7 führt der Sicherheitsgurt 4 weiter zum schwellerseitigen hinteren Ende der Sitzteilstruktur 2 und weist an seinem zweiten Ende einen Gurtendbeschlag 8 auf, der durch eine Schraube 9 an der Sitzteilstruktur 2 befestigt ist.

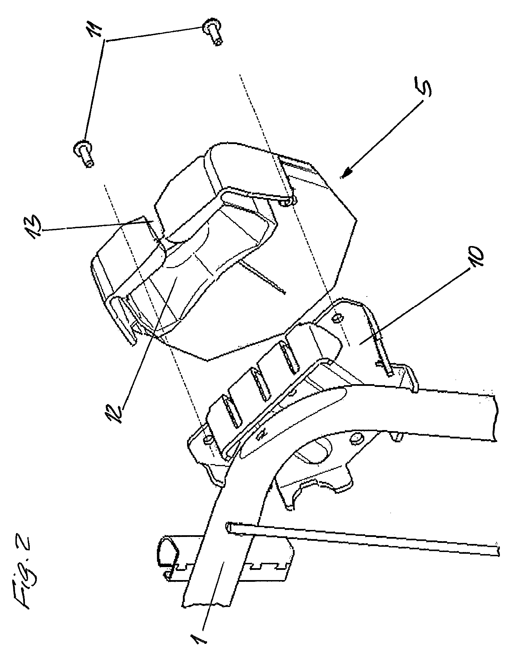

Wie in Figur 2 zu sehen ist, ist ein Gurtumlenkerhalter 10 mit dem schwellerseitigen oberen Eckbereich der Lehnenstruktur 1 verschweißt und der Gurtumlenker 5 mittels Schrauben 11 mit dem Gurtumlenkerhalter 10 fest verbindbar.

Zum einfachen Einführen des Sicherheitsgurtes 5 in die Gurtlauföffnung 12 des Gurtumlenkers 5 führt von der oberen Außenkontur des Gurtumlenkers 5 ein durchgehender Einführschlitz 13 zur Gurtlauföffnung 12.

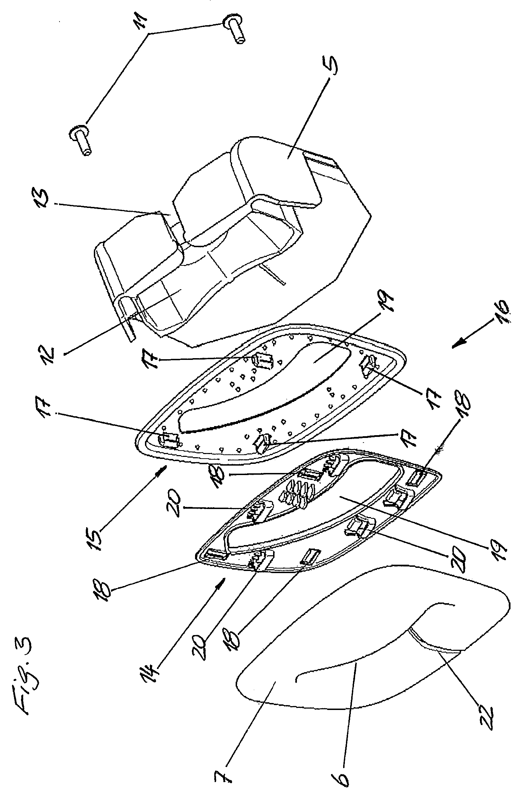

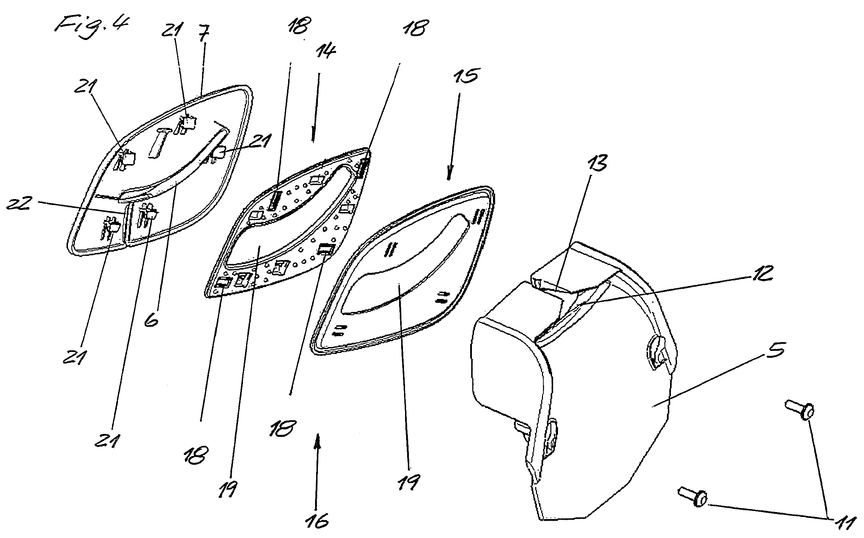

Wie in Fig. 3 und Fig. 4 dargestellt, ist in Fahrtrichtung vor dem Gurtumlenker 5 zunächst eine aus einem Blendenvorderteil 14 und einem Blendenrückteil 15 bestehende Bezugsblende 16 und dann die Gurtblende 7 angeordnet.

Das Blendenvorderteil 14 weist Rastausnehmungen 18 auf, in die entsprechende erste Rastelemente 17 des Blendenrückteils 15 einrastbar sind, um das plattenartig ausgebildete Blendenvorderteil 14 mit dem ebenfalls plattenartig ausgebildeten Blendenrückteil 15 zur Bezugsblende 16 zu verbinden.

Die Außenkonturen von Blendenvorderteil 14 und Blendenrückteil 15 bestehen so wie auch die Gurtblende 7 aus einem Kunststoff.

Fluchend zur Gurtlauföffnung 12 besitzen das Blendenvorderteil 14 und das Blendenrückteil 15 eine Durchstecköffnung 19, deren Querschnitt eine solche Form und Größe besitzt, daß der Gurtendbeschlag 8 und eine Steckzunge 26 hindurchgeführt werden können.

Das Blendenvorderteil 14 weist auf seiner der Gurtblende 7 zugewandten Seite zweite Rastelemente 20 auf, mit denen entsprechende Gegenrastelemente 21 der Gurtblende 7 zum Befestigen der Gurtblende 7 an der Bezugsblende 16 verrastbar sind.

Mit der Durchstecköffnung 19 fluchend ist in der Gurtblende 7 der Gurtführungsschlitz 6 entsprechend Breite und Dicke des Sicherheitsgurtes 4 ausgebildet.

Um den Sicherheitsgurt 4 in den Gurtführungsschlitz 6 einzuführen, ist in der Gurtblende 7 ein Einfädelschlitz 22 ausgebildet, der in Erstreckungsrichtung des Sicherheitsgurtes 4 den Gurtführungsschlitz 6 mit der Umlaufkontur der aus Kunststoff bestehenden Gurtblende 7 verbindet.

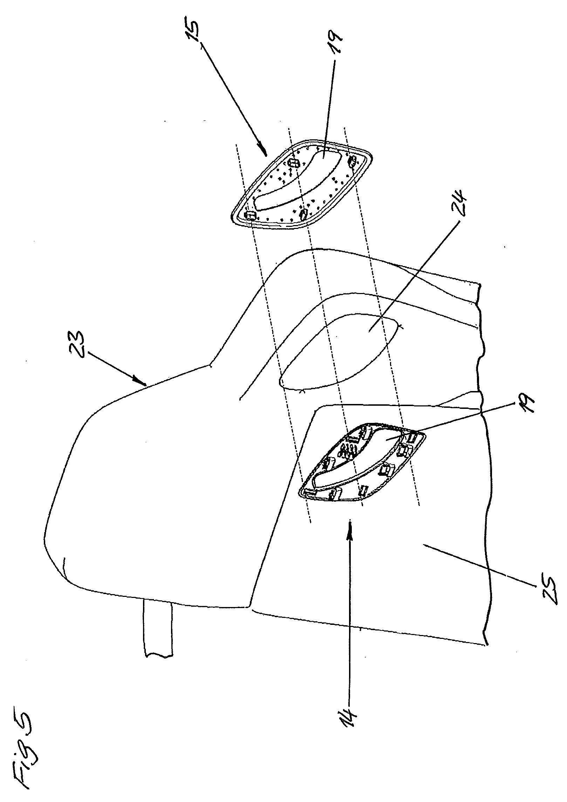

Wie in Fig. 5 dargestellt, ist ein Lehnenbezug 23 so ausgebildet, daß er umhüllend über die mit einem Polster versehene Lehnenstruktur 1 einschließlich Gurtumlenker 5 und Gurtumlenkerhalter 10 gezogen werden kann.

Fluchend mit der Gurtlauföffnung 12 des Gurtumlenkers 5 weist der Lehnenbezug 23 an seinem vorderseitigen Bezugsteil 25 eine Gurtdurchtrittsöffnung 24 auf, in deren Bereich die Bezugsblende 16 an dem vorderseitigen Bezugsteil 25 des Lehnenbezugs 23 so befestigt ist, daß die Durchstecköffnung 19 der Bezugsblende 16 mit der Gurtdurchtrittsöffnung 24 fluchtet.

Dazu wird das Blendenrückteil 15 entsprechend auf die Innenseite des Bezugteils 25 und das Blendenvorderteil 14 auf die Außenseite des Bezugteils 25 aufgelegt und durch Zusammendrücken von Blendenrückteil 15 und Blendenvorderteil 14 miteinander verrastet und damit auch mit dem Bezugsteil 25 verbunden. Das Blendenvorderteil 14 und das Blendenrückteil 15 bilden so die Bezugsblende 16, welche das Bezugsteil 25 und damit auch den Lehnenbezug 23 teilweise umgreift.

Zur Montage des Sicherheitsgurts 4 wird der Lehnenbezug 23 über die mit einem Polster belegte Lehnenstruktur 1 gezogen. Dabei wird das mit dem Gurtendbeschlag 8 versehene Ende des eine Steckzunge 26 tragenden Sicherheitsgurts 4 auf der Rückseite der Lehnenstruktur 1 unter dem Lehnenbezug 23 zum Gurtumlenker 5, durch dessen Gurtlauföffnung 12 und durch die Durchstecköffnung 19 der Bezugsblende 16 geführt. Weiterhin wird dabei auch die Steckzunge 26 bis durch die Bezugsblende 16 geführt. Zum Schließen des Sicherheitsgurt 4 ist die Steckzunge 26 in einem tunnelseitig neben oder an der Sitzteilstruktur 2 angeordneten Schloß einsteckbar.

Von der Bezugsblende 16 wird der Sicherheitsgurt 4 mit seinem Gurtendbeschlag 8 weiter bis zum schwellerseitigen hinteren Ende der Sitzteilstruktur 2 geführt und der Gurtendbeschlag 8 mittels der Schraube 9 an der Sitzteilstruktur 2 befestigt. Die Befestigung kann auch an einem fahrzeugfesten Bauteil erfolgen.

Nun erfolgt ein Einfädeln des aus der Bezugsblende 16 herausragenden Bereich des Sicherheitsgurts 4 über den Einfädelschlitz 22 in den Gurtführungsschlitz 6 der Gurtblende 7 und ein Aufrasten der Gurtblende 7 auf die Bezugsblende 16.

Damit ist die Gurtblende 7 über die Bezugsblende 16 mit dem Bezugsteil 25 des flexiblen Lehnenbezugs 23, nicht aber mit dem Gurtumlenker 5 fest verbunden.

Auf diese Weise wird der Gurtlauf durch den Gurtumlenker 5 und nicht durch die Bezugsblende 16 und die Gurtblende 7 beeinflußt, so daß die Lage des Umlenkungspunkts in der Gurtlauföffnung 12 des Gurtumlenkers 5 ebenfalls nicht beeinflußt und damit auch nicht verändert wird.

### Bezugszeichenliste

- 1: Lehnenstruktur
- 2: Sitzteilstruktur
- 3: Gurtaufrollautomat
- 4: Sicherheitsgurt
- 5: Gurtumlenker
- 6: Gurtführungsschlitz
- 7: Gurtblende
- 8: Gurtendbeschlag
- 9: Schraube
- 10: Gurtumlenkerhalter
- 11: Schrauben
- 12: Gurtlauföffnung
- 13: Einführschlitz
- 14: Blendenvorderteil
- 15: Blendenrückteil
- 16: Bezugsblende
- 17: erste Rastelemente
- 18: Rastausnehmungen
- 19: Durchstecköffnung
- 20: zweite Rastelemente
- 21: Gegenrastelemente
- 22: Einfädelschlitz
- 23: Lehnenbezug
- 24: Gurtdurchtrittsöffnung
- 25: Bezugsteil
- 26: Steckzunge

## Patentansprüche

1. Fahrzeugsitz, insbesondere Kraftfahrzeugsitz, mit einer Sitzteilstruktur (2) und einer mit seinem unteren Ende an der Sitzteilstruktur (2) schwenkbar angeordneten, von einem Lehnenbezug (23) überzogenen Lehnenstruktur (1), an deren schwellerseitigem oberen Bereich ein Gurtumlenker (5) mit einer in Fahrzeuglängsrichtung gerichteten Gurtlauföffnung (12) für einen Sicherheitsgurt (4) befestigt ist, der von einem das eine Ende des Sicherheitsgurtes (4) fest aufnehmenden Gurtaufrollautomaten (3) aus durch die Gurtlauföffnung (12) des Gurtumlenkers (5) geführt ist, wobei der Gurtumlenker (5) von dem Lehnenbezug (23) überzogen ist, wobei der Lehnenbezug (23) überdeckend mit der Gurtlauföffnung(12) eine durchgehende Gurtdurchtrittsöffnung (24) aufweist, die lehnenvorderseitig von einer einen Gurtführungsschlitz (6) aufweisenden, mit dem Lehnenbezug (23) fest verbundenen und mit dem Gurtumlenker (5) nicht fest verbundenen Gurtblende (7) abgedeckt ist.

2. Fahrzeugsitz nach Anspruch 1, **dadurch gekennzeichnet, daß** der Sicherheitsgurt (4) von dem an der Rückseite des Fahrzeugsitzes im Bodenbereich angeordneten Gurtaufrollautomaten (3) über die Rückseite des Fahrzeugsitzes oder die Lehnenstruktur (1) zum Gurtumlenker (5), durch dessen Gurtlauföffnung (12) sowie die Gurtdurchtrittsöffnung (24) und den Gurtführungsschlitz (6) zur Lehnenvorderseite und von dort zu einem schwellerseitig an der Sitzteilstruktur (2) angeordneten Gurtendbeschlag (8) geführt und mit seinem zweiten Ende mit dem Gurtendbeschlag (8) fest verbunden ist, wobei eine Steckzunge (26) verschiebbar zwischen dem Gurtführungsschlitz (6) und dem Gurtendbeschlag (8) auf dem Sicherheitsgurt (4) angeordnet und mit einem tunnelseitig an der Sitzteilstruktur (2) angeordneten Schloß verbindbar ist.

3. Fahrzeugsitz nach Anspruch 2, **dadurch gekennzeichnet, daß** der Sicherheitsgurt (4) innerhalb des die Lehne lehnenvorderseitig und lehnenrückseitig bedeckenden Lehnenbezuges (23) von dem Gurtaufrollautomaten (3) zum Gurtumlenker (5) geführt ist.

4. Fahrzeugsitz nach einem der vorhergehenden Ansprüche, **dadurch gekennzeichnet, daß** die lehnenvorderseitig auf dem Lehnenbezug (23) aufliegende Gurtblende (7) mit einer den Lehnenbezug (23) teilweise umgreifenden, eine mit der Gurtlauföffnung (12) und dem Gurtführungsschlitz (6) fluchtende Durchstecköffnung (19) aufweisenden Bezugsblende (16) verbunden ist.

5. Fahrzeugsitz nach Anspruch 4, **dadurch gekennzeichnet, daß** die Gurtblende (7) mittels einer Rastverbindung mit der Bezugsblende (16) verbunden ist.

6. Fahrzeugsitz nach einem der Ansprüche 4 und 5, **dadurch gekennzeichnet, daß** die Bezugsblende (16) aus einem lehnenvorderseitig auf dem Lehnenbezug (23) aufliegenden Blendenvorderteil (14) und einem lehnenrückseitig auf dem Lehnenbezug (23) aufliegenden Blendenrückteil (15) besteht, die miteinander verbunden sind, wobei die Gurtblende (7) über das Blendenvorderteil (14) auf dem Lehnenbezug (23) in Auflage ist.

7. Fahrzeugsitz nach Anspruch 6, **dadurch gekennzeichnet, daß** das Blendenvorderteil (14) und das Blendenrückteil (15) mittels einer Rastverbindung miteinander verbindbar sind.

8. Fahrzeugsitz nach einem der Ansprüche 4 bis 7, **dadurch gekennzeichnet, daß** die Gurtlauföffnung (12) des Gurtumlenkers (5) und/oder die Durchstecköffnung (19) der Bezugsblende (16) einen ein Durchführen des Gurtendbeschlags (8) erlaubenden Querschnitt aufweisen.

9. Fahrzeugsitz nach einem der vorhergehenden Ansprüche, **dadurch gekennzeichnet, daß** der Querschnitt des Gurtführungsschlitzes (6) dem Querschnitt des Sicherheitsgurtes (4) entspricht.

10. Fahrzeugsitz nach einem der vorhergehenden Ansprüche, **dadurch gekennzeichnet, daß** die Gurtblende (7) einen den Gurtführungsschlitz (6) mit der Umlaufkontur der Gurtblende (7) verbindenden, in Erstreckungsrichtung des Sicherheitsgurtes (4) durchgehenden Einfädelschlitz (22) aufweist.

## Claims

1. Vehicle seat, in particular motor vehicle seat, comprising a seat part structure (2) and a backrest structure (1) pivotably arranged with its lower end on the seat part structure (2) and covered by a backrest lining (23), a belt deflector (5) with a belt runner opening (12) for a seat belt (4) being fastened to the upper region of said backrest structure on the vehicle sill side, said belt runner opening being oriented in the longitudinal direction of the vehicle, and said seat belt being guided out of a belt roller mechanism (3) fixedly receiving one end of the seat belt (4) through the belt runner opening (12) of the belt deflector (5), wherein the belt deflector (5) is covered by the backrest lining (23), wherein the backrest lining (23) comprises a continuous belt through-opening (24) which coincides with the belt runner opening (12), said belt through-opening being covered on the backrest front face by a belt cover (7) comprising a belt guide slot (6), fixedly connected to the backrest lining (23), and not fixedly connected to the belt deflector (5).

2. Vehicle seat according to Claim 1, **characterized in that** the seat belt (4) is guided from the belt roller mechanism (3) arranged on the rear face of the vehicle seat in the floor region, over the rear face of the vehicle seat or the backrest structure (1) to the belt deflector (5), through the belt runner opening (12) thereof and the belt through-opening (24) and the belt guide slot (6) to the backrest front face and from there to a belt end fitting (8) arranged on the seat part structure (2) on the vehicle sill side, and with its second end is fixedly connected to the belt end fitting (8), wherein an insertion tongue (26) is displaceably arranged between the belt guide slot (6) and the belt end fitting (8) on the seat belt (4) and is able to be connected to a lock arranged on the seat part structure (2) on the tunnel side.

3. Vehicle seat according to Claim 2, **characterized in that** the seat belt (4) is guided inside the backrest lining (23), which covers the backrest on the backrest front face and the backrest rear face, from the belt roller mechanism (3) to the belt deflector (5).

4. Vehicle seat according to one of the preceding claims, **characterized in that** the belt cover (7) which bears against the backrest lining (23) on the backrest front face is connected to a lining cover (16) partially encompassing the backrest lining (23), comprising a through-opening (19) aligned with the belt runner opening (12) and the belt guide slot (6).

5. Vehicle seat according to Claim 4, **characterized in that** the belt cover (7) is connected by means of a latching connection to the lining cover (16).

6. Vehicle seat according to one of Claims 4 and 5, **characterized in that** the lining cover (16) consists of a cover front part (14) bearing on the backrest lining (23) on the backrest front face and a cover rear part (15) bearing on the backrest lining (23) on the backrest rear face, which are connected together, wherein the belt cover (7) bears on the backrest lining (23) via the cover front part (14).

7. Vehicle seat according to Claim 6, **characterized in that** the cover front part (14) and the cover rear part (15) are able to be connected together by means of a latching connection.

8. Vehicle seat according to one of Claims 4 to 7, **characterized in that** the belt runner opening (12) of the belt deflector (5) and/or the through-opening (19) of the lining cover (16) have a cross section permitting the belt end fitting (8) to be passed through.

9. Vehicle seat according to one of the preceding claims, **characterized in that** the cross section of the belt guide slot (6) corresponds to the cross section of the seat belt (4).

10. Vehicle seat according to one of the preceding claims, **characterized in that** the belt cover (7) has a thread-in slot (22) connecting the belt guide slot (6) with the peripheral contour of the belt cover (7), running in the direction of extension of the seat belt (4).

## Revendications

1. Siège de véhicule, en particulier siège de véhicule automobile, avec une structure de partie de siège (2) et une structure de dossier (1) disposée de façon articulée par son extrémité inférieure à la structure de partie de siège (2) et revêtue d'un habillage de dossier (23), à la région supérieure de laquelle est fixé, du côté du seuil de porte, un déviateur de ceinture (5) avec une ouverture de passage de ceinture (12) orientée dans la direction longitudinale du véhicule pour une ceinture de sécurité (4), qui est guidée à travers l'ouverture de passage (12) du déviateur de ceinture (5) par un enrouleur de ceinture automatique (3) retenant solidement une première extrémité de la ceinture de sécurité (4), dans lequel le déviateur de ceinture (5) est recouvert par l'habillage de dossier (23), dans lequel l'habillage de dossier (23) présente, en recouvrement de l'ouverture de passage de ceinture (12), une ouverture de passage de ceinture continue (24) qui est recouverte, du côté avant du dossier, par un cache de ceinture (7) présentant une fente de guidage de ceinture (6), attaché à l'habillage de dossier (23) et assemblé de façon amovible au déviateur de ceinture (5).

2. Siège de véhicule selon la revendication 1, **caractérisé en ce que** la ceinture de sécurité (4) est guidée à partir de l'enrouleur de ceinture automatique (3) disposé au dos du siège de véhicule dans la région du fond via le dos du siège de véhicule ou la structure de dossier (1) jusqu'au déviateur de ceinture (5), à travers l'ouverture de passage de ceinture (12) de celui-ci ainsi qu'à travers l'ouverture de passage de ceinture (24) et la fente de guidage de ceinture (6) jusqu'au côté avant du dossier et de là jusqu'à une ferrure d'extrémité de ceinture (8) disposée du côté du seuil de porte sur la structure de partie de siège (2) et est solidement attachée par sa deuxième extrémité à la ferrure d'extrémité de ceinture (8), dans lequel une patte enfichable (26) est disposée de façon coulissante sur la ceinture de sécurité (4) entre la fente de guidage de ceinture (6) et la ferrure d'extrémité de ceinture (8) et peut être assemblée avec un verrou disposé sur la structure de partie de siège (2) du côté du tunnel central.

3. Siège de véhicule selon la revendication 2, **caractérisé en ce que** la ceinture de sécurité (4) est guidée à l'intérieur de l'habillage de dossier (23) recouvrant le dossier du côté avant du dossier et du côté arrière du dossier depuis l'enrouleur de ceinture automatique (3) jusqu'au déviateur de ceinture (5).

4. Siège de véhicule selon l'une quelconque des revendications précédentes, **caractérisé en ce que** le cache de ceinture (7) appliqué sur l'habillage de dossier (23) du côté avant du dossier est assemblé à un cache d'habillage (16) entourant partiellement l'habillage de dossier (23) et présentant une ouverture d'enfichage (19) en alignement avec l'ouverture de passage de ceinture (12) et avec la fente de guidage de ceinture (6).

5. Siège de véhicule selon la revendication 4, **caractérisé en ce que** le cache de ceinture (7) est assemblé au cache d'habillage (16) par encliquetage.

6. Siège de véhicule selon l'une des revendications 4 ou 5, **caractérisé en ce que** le cache d'habillage (16) se compose d'une partie de cache avant (14) appliquée sur l'habillage de dossier (23) du côté avant du dossier et d'une partie de cache arrière (15) appliquée sur l'habillage de dossier (23) du côté arrière du dossier, qui sont assemblées l'une à l'autre, dans lequel le cache de ceinture (7) s'appuie sur l'habillage de dossier (23) par l'intermédiaire de la partie de cache avant (14).

7. Siège de véhicule selon la revendication 6, **caractérisé en ce que** la partie de cache avant (14) et la partie de cache arrière (15) peuvent être assemblées l'une à l'autre par encliquetage.

8. Siège de véhicule selon l'une quelconque des revendications 4 à 7, **caractérisé en ce que** l'ouverture de passage de ceinture (12) du déviateur de ceinture (5) et/ou l'ouverture d'enfichage (19) du cache d'habillage (16) présentent une section transversale permettant un passage de la ferrure d'extrémité de ceinture (8).

9. Siège de véhicule selon l'une quelconque des revendications précédentes, **caractérisé en ce que** la section transversale de la fente de guidage de ceinture (6) correspond à la section transversale de la ceinture de sécurité (4).

10. Siège de véhicule selon l'une quelconque des revendications précédentes, **caractérisé en ce que** le cache de ceinture (7) présente une fente d'enfilage (22) reliant la fente de guidage de ceinture (6) au contour périphérique du cache de ceinture (7) et ininterrompue dans la direction d'extension de la ceinture de sécurité (4).
